Europäisches Patentamt

European Patent Office

Office européen des brevets

(19)

(11) Veröffentlichungsnummer: **0 101 755**
**A1**

(12) # EUROPÄISCHE PATENTANMELDUNG

(21) Anmeldenummer: 82108001.7

(22) Anmeldetag: 31.08.82

(51) Int. Cl.³: **A 23 L 1/236**
**A 61 K 9/20**

(43) Veröffentlichungstag der Anmeldung:
07.03.84 Patentblatt 84/10

(84) Benannte Vertragsstaaten:
AT BE CH DE FR GB IT LI LU NL SE

(71) Anmelder: CHIMICASA GMBH
Wiesentalstrasse 81
CH-7000 Chur(CH)

(72) Erfinder: Wolf, Erich, Dr.
Florianstrasse 19
D-5066 Overath-Marialinden(DE)

(72) Erfinder: Deininger, Rolf, Dr.
Fürst-Pückler-Strasse 44
D-5000 Köln 41(DE)

(74) Vertreter: Hach, Hans Karl, Dr.
Tarunstrasse 23
D-6950 Mosbach-Waldstadt(DE)

(54) **Wassarlösliche, durch Pressen verfestigte Süssungstablette.**

(57) Eine Süßungstablette besteht aus 100 Gewichtsteilen APM (= L-Aspartyl-L-phenylalaninmethylester), eingesetzt mit einer Körnchengröße von 0,01 bis 0,4 mm, 150 bis 400 Teilen Glycin, 10 bis 40 Teilen Löslichkeitsbeschleuniger und bis zu 4 Teilen Tablettierhilfsmittel, jeweils bezogen auf das Trockengewicht.

EP 0 101 755 A1

## Wasserlösliche, durch Pressen verfestigte Süßungstablette

Die Erfindung betrifft eine wasserlösliche, durch Pressen verfestigte Süßungstablette mit feinvermahlenem APM (= L-Aspartyl-L-phenylalaninmethylester) als Süßungsmittel, einem Vielfachen des APM-Gewichtes an wasserlöslichem Füllstoff, einem Bruchteil des APM-Gewichtes an Löslichkeitsbeschleuniger und einem Bruchteil des APM-Gewichtes an Tablettierhilfsmittel.

Der eingesetzte Füllstoff wirkt dabei als Trennmittel, indem er beim Tablettieren verhindert, daß die einzelnen APM-Körnchen miteinander verklumpen. Im Wasser löst sich der Füllstoff auf und die APM-Körnchen werden in die Lösung freigesetzt. Dieser Vorgang wird begünstigt und beschleunigt durch den Löslichkeitsbeschleuniger. Als Füllstoff ist bei einer bekannten Süßungstablette Lactose eingesetzt.

Es ist aber wünschenswert – unter anderem, weil solche Süßungstabletten auch von Diabetikern genossen werden – verdauliche Kohlehydrate ( und dazu gehört Lactose ) zu vermeiden.

Dies wird erreicht, indem, bezogen auf das Trockengewicht, auf 100 Gewichtsteile APM eingesetzt sind:
150 bis 400, vorzugsweise 310 bis 350 Teile, Glycin als Füllstoff,
10 bis 40, vorzugsweise 12 bis 16 Teile, Löslichkeitsbeschleuniger, und
0 bis 4,0, vorzugsweise 0,8 bis 1,2 Teile Tablettierhilfsmittel;

- 2 -

und dadurch, daß das APM mit einer Körnchengröße von 0,01 bis 0,4 mm eingesetzt ist und daß der Löslichkeitsbeschleuniger ein in Wasser quellender, vorzugsweise quervernetzter, Gallertbildner ist.

Die Erfindung macht sich dabei den Umstand zunutze, daß Glycin als Bestandteil vieler Nahrungsmittel physiologisch unbedenklich ist und als Aminosäure mit den Bestandteilen des APM harmoniert.

Der Löslichkeitsbeschleuniger treibt als Quellmittel die Tablette bei Wasserzutritt auseinander.

Als Löslichkeitsbeschleuniger empfiehlt sich quervernetztes NaCMC (= Natriumcarboxymethylcellulose), das auch unter dem Handelsnamen Ac-Di-Sol bekannt ist, und/oder quervernetztes PVP (= Polyvinylpyrrolidon), das auch unter dem Handelsnamen PLASTONE bekannt ist, und/oder modifizierte Stärke, deren Modifikation das Quellverhalten begünstigt. Eine solche modifizierte Stärke, die bevorzugt als Löslichkeitsbeschleuniger eingesetzt wird, ist NaCMS (= Natriumcarboxymethylstärke = das Natriumsalz des Carboxymethyläthers der Stärke = englisch: sodium starch glycolate). Diese modifizierte Stärke ist unter dem Handelsnamen PRIMOJEL bekannt.

Das Tablettierhilfsmittel dient vorzugsweise als Gleitmittel beim Pressen der Tabletten. Dafür empfiehlt sich GPS (= Glycerinpalmitostearat), das auch unter der Handelsbezeichnung PRECIROL bekannt ist, und L-Leucin. Beim Einsatz geeigneter, moderner Tablettiermaschinen kann man auf das Tablettierhilfsmittel unter Umständen ganz verzichten.

Beispiel 1:

Es werden eingesetzt:
als Süßungsmittel 180 g (Gramm) = 22,50 % APM mit einer Korngröße von 0,05 bis 0,1 mm,
als Füllstoff 588 g = 73,56 % Glycin,
als Löslichkeitsbeschleuniger 30 g = 3,75 % quervernetztes NaCMC,
als Tablettierhilfsmittel 2 g = 0,25 % GPS,
250 ml (Milliliter) destilliertes Wasser.
Dabei sind die Prozentangaben Trockengewichtsprozente.

Tablettierung:

Aus dem APM, dem Glycin und dem Wasser wird eine Mischung gebildet. Diese Mischung wird durch ein Sieb mit 1,6 mm Maschenweite getrieben und in einer Schichtstärke von 1 cm (Zentimeter) bei 70°C (Grad Celsius) über 5 Stunden getrocknet bis auf eine Restfeuchte von 3 %. Die so gewonnene Trockensubstanz wird durch ein Sieb mit 0,3 mm Maschenweite getrieben und mit dem NaCMC und dem GPS vermischt. Die dabei gewonnene, gut fließfähige Pulvermischung wird zu Tabletten verpreßt.

Eigenschaften der hergestellten Tabletten:

Gewicht einer fertigen Tablette: 80 mg (Milligramm);
Abmessungen einer fertigen Tablette: rund, Durchmesser 5 mm;
Auflösungszeit in 18°C warmem Wasser: innerhalb von 60 Sekunden;
Farbe der Tablette: weiß;
Stabilität bei Lagerung der Tablette über 90 Tage bei 35°C und 80 % relativer Luftfeuchtigkeit: keinerlei Veränderung.

Die nachfolgenden Beispiele unterscheiden sich vom Beispiel 1 nur durch die Angaben aus der nachfolgenden Tabelle.

— 4 —

TABELLE:

| es wurde eingesetzt | 2. Beispiel | 3. Beispiel |
|---|---|---|
| A Süßstoffmenge | 100 g | 100 g |
| B Korngröße von A | 0,1 - 0,4 mm | 0,01 - 0,05 mm |
| C Menge von Füllstoff | 150 g | 400 g |
| D Löslichkeitsb. | NaCMS | PVP |
| E Menge von D | 10 g | 40 g |
| F Tablettierh. | L-Leucin | ---- |
| G Menge von F | 4,0 g | 0 g |
| H Wassermenge | 80 ml | 180 ml |
| Eigenschaften der fertigen Tablette | | |
| I Gewicht | 50 mg | 100 mg |
| K Abmessungen | 4 mm $\emptyset$ | 6 mm $\emptyset$ |
| L Auflöstungszeit* | innerh. 120 sec | innerh. 60 sec |
| M Stabilität* | wie Beispiel 1 | wie Beispiel 1 |
| N Farbe | wie Beispiel 1 | wie Beispiel 1 |

* jeweils unter den Bedingungen wie im Beispiel 1 angegeben.

Bei zuviel Füllstoff wird eine unnötige Menge an Füllstoff eingesetzt. Die Füllstoffmenge aus Beispiel 3 ist gerade noch tragbar.

Bei zuwenig Füllstoff reicht der Füllstoff nicht mehr aus,um die APM-Körnchen sicher voneinander zu trennen, wie dies für eine schnelle Löslichkeit wünschenswert ist. Die Füllstoffmenge aus Beispiel 2 reicht gerade noch aus für eine hinreichende Löslichkeit.

Patentansprüche:

1. Wasserlösliche, durch Pressen verfestigte Süßungstablette mit feinvermahlenem APM (= L-Aspartyl-L-phenylalaninmethylester) als Süßungsmittel, einem Vielfachen des APM-Gewichtes an wasserlöslichem Füllstoff, einem Bruchteil des APM-Gewichtes an Löslichkeitsbeschleuniger und einem Bruchteil des APM-Gewichtes an Tablettierhilfsmittel, dadurch gekennzeichnet, daß, bezogen auf das Trockengewicht, auf 100 Gewichtsteile APM eingesetzt sind:

150 bis 400 Teile Glycin als Füllstoff

10 bis 40 Teile Löslichkeitsbeschleuniger, und

0 bis 4,0 Teile Tablettierhilfsmittel;

daß das APM mit einer Körnchengröße von 0,01 bis 0,4 mm eingesetzt ist,

und daß der Löslichkeitsbeschleuniger ein in Wasser quellender Gallertbildner ist.

2. Süßungstablette nach Anspruch 1, dadurch gekennzeichnet, daß der Löslichkeitsbeschleuniger aus quervernetztem NaCMC (= Natriumcarboxymethylcellulose) besteht.

3. Süßungstablette nach Anspruch 1, dadurch gekennzeichnet, daß der Löslichkeitsbeschleuniger aus quervernetztem PVP (= Polyvinylpyrrolidon) besteht.

4. Süßungstablette nach Anspruch 1, dadurch gekennzeichnet, daß der Löslichkeitsbeschleuniger aus modifizierter Stärke besteht, deren Modifikation das Quellverhalten begünstigt.

5. Süßungstablette nach Anspruch 4, dadurch gekennzeichnet, daß der Löslichkeitsbeschleuniger aus NaCMS (= Natriumcarboxymethylstärke) besteht.

6. Süßungstablette nach einem der vorhergehenden Ansprüche, dadurch gekennzeichnet, daß, bezogen auf das Tockengewicht, eingesetzt sind:

22,50 % APM,

73,50 % Glycin,

3,75 % NaCMC

und  0,25 % GPS (= Glycerinpalmitostearat).

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | Patent Abstracts of Japan Band 6, Nr. 139, 28. Juli 1982 & JP-A-57-63068 | | A 23 L 1/236<br>A 61 K 9/20 |
| A | CH-A- 627 926 (GENERAL FOODS CORP.)<br>* Ansprüche 3, 4, 8 * | | |
| A | BE-A- 660 615 (MONSANTO CO.)<br><br>* Ansprüche 1, 4 * | | |

RECHERCHIERTE SACHGEBIETE (Int. Cl. ³)

A 23 L 1/00
A 61 K 9/00

Der vorliegende Recherchenbericht wurde für alle Patentansprüche erstellt.

| Recherchenort<br>BERLIN | Abschlußdatum der Recherche<br>29-03-1983 | Prüfer<br>SCHULTZE D |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82